# EUROPEAN PATENT SPECIFICATION

(11) **EP 3 164 645 B1**
(45) Date of publication and mention of the grant of the patent: **12.05.2021**
(21) Application number: 15733518.3
(22) Date of filing: 30.06.2015
(51) Int. Cl.: F24S 10/50

(54) **A WATER HEATER / AIR HEATER SYSTEM**
EIN WASSER / LUFT HEIZUNGSSYSTEM
UN SYSTÈME DE CHAUFFAGE D'EAU / CHAUFFAGE D'AIR

(30) Priority: 01.07.2014 GB 201411687
(43) Date of publication of application: 10.05.2017
(73) Proprietor: Epicuro Ltd, London W1S 4TE (GB)
(72) Inventor: HLEBAROV, Vejen, Epsom KT19 9AA (GB)
(74) Representative: Butler, Kathryn Louise
(86) International application number: PCT/GB2015/051905
(87) International publication number: WO 2016/001649

(56) References cited:
- EP-A1- 0 004 060
- EP-A1- 1 918 661
- EP-A2- 0 022 940
- DE-A1- 2 510 321
- DE-A1- 3 100 521
- DE-A1- 3 434 413
- DE-A1-102007 041 267
- DE-A1-102010 019 575
- DE-U1- 7 720 646
- DE-U1- 29 603 275
- DE-U1-202006 015 717
- US-A- 4 607 616
- DATABASE WPI Week 198319 Thomson Scientific, London, GB; AN 1983-G1281K XP002743540, -& BE 895 484 A (SPROELANTS M) 15 April 1983 (1983-04-15)

## Description

The present invention relates to a water heater / air heater system comprising a solar collector comprising a heat exchanger, typically used with water systems such as for example household solar water systems.

### Background to the invention

Solar panel technology has emerged over the last 100 years. Initial solar panel technology used simple black painted water containers which were exposed to the sun radiation for indirect heat transfer. This technology was however only capable of extracting between about 25 to 30% of the energy obtained from the sun's radiation due to the cooling of the container from the ambient air. Solar panel technology has evolved over the last 50 years to provide commercial products with improved heat transfer which can be easily assembled within existing household water systems. The demand for solar panel systems for use with household water system is high due to the fact that a typical household uses most of their energy supply to heat water.

Conventional solar panel systems have been proven to be effective in different conditions and can typically convert between 80-90% of the solar energy into heat. There are however a number of limitations on the conventional hot water solar systems and as such the conventional systems are unable to satisfy the market demand.

Although recent improvements have resulted in systems with improved heat extraction, such as for example by using vacuum tubes, it has been found that the overall production cost of such technology is considerably high and the return on investment per kilowatt energy is small.

Conventional systems also require the use of a heat exchanger with a heat exchange liquid. The systems provide a method of separation between the water which is used by the household and the heat exchange liquid which is heated within the panel. The heat exchange liquid is typically antifreeze and therefore this raises a number of environmental issues. The heat exchanger is the only means of separation between the water which is to be used by the household and the heat exchange liquid. There is therefore a potential health risk associated with these systems if for example the heat exchanger was to become damaged or to break.

There are also additional costs associated with the use of a heat exchange liquid as the system will require servicing in order to replace and/or dispose of the heat exchange liquid. Conventional solar panels typically use copper pipes to provide a heat absorption surface. There are weight considerations and cost implications associated with the use of copper within the solar panels. A typical solar panel uses between about 20 to 30 kg copper piping which covers only approximately 10% of the effective solar exposure surface of the panel. In order to extract more solar energy from the exposed surface a back plate reflector is required to be installed to the panel. This additional back plate reflector increases the weight of the panel by a further 5 kg approximately. Due to the weight of the conventional solar panels, together with the weight of the water inside the collector, the solar panels require heavy supporting construction which further adds to the cost and weight of the system. As a result, the assembly of conventional solar collectors is slow and in order to achieve sufficient energy extraction, multiple panels are usually required. The panels therefore needed to be connected to each other which often produces a mechanical weak point as well as causing further heat loss.

EP1918661 discloses a building element with integrated solar heating element. The building element used preferably for roofing or facade application is characterized in that the building element comprises a poly-carbonate panel. The panel comprises a plurality of cells. The panel further comprises at least one layer of poly-carbonate, preferably at least two. The panel is at least partially transparent. The panel operates as a heat exchanger transferring heat from solar radiation onto heat transporting fluid. The cells are positioned lengthwise along position of direction of fluid movement. The cells further comprise a transport means for heat transporting fluid, thermal radiation absorbing means, and thermal radiation concentrating means.

DE7720646 discloses a solar collector formed from a plurality of channels running parallel to one another and connected to one another via collecting lines. The collector has an absorber in the form of a thin-walled darker plate made of heat absorbing material. The absorber is present within the channels.

DE102007041267 discloses a thermal solar collector comprising a base body containing or consisting of at least one plastic material that is at least partially transparent to solar radiation, which has at least one heat transfer layer with at least one has a heat transfer fluid through which a heat transfer fluid flows, and at least one absorption body within at least one of the heat transfer channels.

DE102010019575 discloses a collector for heating air and / or other low-viscosity media by means of solar energy consisting of individual modules which are tightly connected to one another. The individual modules are joined together as one. The individual modules have an absorber in their interior, through which a heat transfer medium flows.

The present invention seeks to address one or more of the problems associated with conventional systems. In particular, the present invention seeks to provide a water heater / air heater system, which addresses one or more of the cost issues, weight considerations, and/or heat transfer efficiencies associated with conventional systems.

### Summary of the Invention

According to a first aspect, the present invention provides
a water and/or air heating system comprising:
a solar collector comprising comprising a heat exchanger comprising:
   a first and a second transparent polymeric sheeting material defining a cavity therebetween suitable for receiving water and also suitable for receiving air; and
   at least one non-transparent heat conductor located within the cavity so as to be submerged inside the water or air within the cavity in use, in which the at least one heat conductor is an elongate portion composed of metal, alloy, or a combination of metals and/or alloys, and wherein, in use, at least the first transparent polymeric sheeting material is exposed to solar radiation, such that infra-red radiation of such solar radiation passes through at least the first transparent polymeric sheeting material to the heat conductor(s) located within the cavity, and the heat conductor releases the radiation as heat directly to the water or air within the cavity;
   a cold water inlet valve and a hot water outlet valve in communication with the cavity of the heat exchanger, in which the valves are selectively operable to allow water to flow through the solar collector;
   a hot water tank in communication with the hot water outlet valve;
   a pump selectively operable to pump water through the solar collector and onwards to the hot water tank;
   a spigot valve selectively operable to drain water from the solar collector;
   an air inlet valve and an air outlet valve in communication with the cavity of the heat exchanger, in which the valves are selectively operable to allow air to flow through the solar collector; and
a low pressure fan or pump selectively operable to pump air around the solar collector.

Conventional solar panels typically comprise a transparent layer composed of glass. Glass has high transparency, durability with respect to UV light, mechanically strong properties and good insulation. The glass layer can however become damaged or broken during bad weather conditions. Furthermore, solar panels comprising a glass layer require additional defrosting steps during cold weather conditions.

The heat exchanger of the present system comprises transparent polymeric sheeting material. One or more of the transparent polymeric sheeting materials is preferably selected from polycarbonate, acrylic (polymethlamethacrylate), butyrate (cellulose acetate butyrate), Lexan (polycarbonate), PETG (glycol modified polyethylene terephthalate), or a combination thereof. Preferably, the transparent polymeric sheeting material is polycarbonate.

The transparent polymeric sheeting material(s) preferably has good impact resistance. For example, acrylics are significantly more resistant, for example 17 times more resistant, to breakage than glass. PETG has significantly greater impact resistance, for example 17 times more impact resistance, than acrylic. Lexan has significantly greater impact for resistance, for example 17 times more impact resistance, than acrylic.

One or more of the transparent polymeric sheeting material(s) may further comprise an abrasion resistance coating.

The transparent polymeric sheeting material(s) preferably has improved machinability and formability compared to glass. Drilling, sawing, and/or routing can be performed on the polymeric sheeting material(s) with standard wood working equipment. The sheeting material(s) may also be produced by heat forming.

The transparent polymeric sheeting material preferably has reduced transparency compared to glass. Preferably, the transparent polymeric sheeting material(s) is selected so as to transmit at least 95%, more preferably at least 80%, for example at least 75% of the light available. As a result of the reduced transparency of the sheeting materials there is some heat loss within the transparent material of the heat exchanger. This heat loss advantageously helps to auto-defrost the solar collector in cold weather.

Transparent polymeric sheeting material also has improved insulation capability compared to glass. This additional insulation capability of the polymeric sheeting materials of the present invention helps to further improve the heat transfer efficiency of the heat exchanger of the present invention.

Furthermore, transparent polymeric sheeting material, for example polycarbonate, is significantly lighter than glass. Preferably, the density of the transparent polymeric sheeting material(s) is at least 25%, more preferably at least 33%, for example 50% less dense than glass. The use of transparent polymeric sheeting material, for example polycarbonate, therefore helps to significantly reduce the overall weight of the heat exchanger, and the solar collector. As a result of the reduced weight, the heat exchanger, and the solar collector, of the present invention therefore do not require any additional heavy supporting construction for attachment to a roof.

Due to the reduced weight of the heat exchanger, the present system also enables large single solar collectors for use with the water heater/air heater system to be produced at lower cost without requiring additional connections to adjacent collectors compared to conventional flat panel solar collectors. Additional connections between collectors also contributes to increased risk of mechanical failure and increases heat losses. The present system therefore advantageously provides a water heater/air heater system comprising lightweight heat exchangers with improved heat extraction and reduced heat losses.

The risk of the heat exchanger, and solar collector, of the system of the present invention becoming damaged or broken is significantly reduced due to the use of transparent polymeric sheeting material, such as for example polycarbonate. The transparent polymeric sheeting material, for example polycarbonate, has increased flexibility compared to glass and as such reduces the risk of the heat exchanger, and solar collector, becoming broken during bad weather conditions such as sleet, hail or storms.

Conventional solar collector's heat exchangers typically comprise a number of pipes containing water. It has been found that approximately half of the solar energy is released in the insulated compartment and half is transmitted to the water as only half of each pipe's surface is submerged in the water. The present invention provides a system comprising a heat exchanger with improved heat exchange efficiency compared to conventional solar collector's heat exchangers. The heat exchanger of the system of the present invention performs heat extraction in two stages. The first stage involves partial heat extraction. The second stage involves full heat extraction performed by heat conductor(s), for example metal plating, being submerged inside the water within the cavity.

In use, the first polymeric sheeting material is exposed to sun radiation. Water passes through the cavity defined between the first and second polymeric sheeting materials. The solar radiation heats up the first sheeting material from the heat exchanger (shown on Figl (1)). The first sheeting material is thin and as a result some of the energy is released to the water within the cavity. The infra-red energy passing through the sheeting material will be released in the water. The energy passes through the water to the heat conductor(s) (Figl (3)). The heat conductor(s) release the radiation as heat directly inside the water within the cavity. As a result, the heat loss from the heat exchanger of the system of the present invention has been found to be significantly less than conventional solar collector's heat exchangers.

The heat exchanger may comprise any suitable number of heat conductors depending on the particular requirements of the heat exchanger. The heat exchanger preferably comprises a plurality of het conductors.

The heat conductor(s) may have any suitable shape and/or dimensions depending on the requirements of the heat exchanger. The heat conductor(s) are preferably elongate portions. The heat conductor(s) may comprise substantially flat portions, for example plate portions. The heat conductor(s) may comprise U-shaped portions. The heat conductor(s) may comprise tubular portions.

The heat conductors may be composed of any suitable material which is non- transparent for IR light, has a low reflective coefficient and is heat conductive, such as for any suitable metal, alloy, or a combination of metals and/or alloys. Preferably, the heat conductor(s) are composed of copper, aluminium, carbon-coated foil, copper/carbon coated foil, carbon composite material, carbon fibre with or without metal inclusions, an alloy, or any combination thereof. It is to be noted that the use of copper confers antibacterial properties, killing bacteria and rendering the water sterile. Preferably, the heat conductor(s) are non-toxic and do not react with water, for example oxidise at raised temperatures, such as for example at a temperature of around 120 °C. The heat conductors are preferably coated to increase the heat transfer efficiency of the metal portions. For example, the heat conductors are preferably coated with a black coating, for example black paint, or oxide paint, or a combination thereof. The heat conductor(s) may be produced with thermally oxide surface.

The heat conductor(s) may be arranged within the cavity in any suitable arrangement. For example, the heat conductor(s) may be arranged within the cavity in a 2D or a 3D arrangement. The heat conductors may be arranged to extend substantially parallel to each other within the cavity. Each heat conductor may be substantially in contact with an adjacent heat conductor.

The heat exchanger may have any suitable shape and/or dimensions. Preferably, the thickness of the heat exchanger as measured between the sun exposure surface, provided by for example the first polycarbonate sheeting material, and outer surface of the second polycarbonate sheeting material is at least 5 mm, preferably at least 10 mm, more preferably at least 15 mm.

The transparent panel of the solar collector may be provided by the first polymeric sheeting material. Alternatively, the solar collector may further comprise a transparent panel arranged in use to be exposed to the sunlight. The transparent panel may be composed of any suitable transparent polymeric material. The transparent may be composed of polycarbonate, acrylic (polymethlamethacrylate), butyrate (cellulose acetate butyrate), Lexan (polycarbonate), PETG (glycol modified polyethylene terephthalate), or a combination thereof. Preferably, the transparent polymeric sheeting material is polycarbonate. The transparent panel may be arranged to be aligned with the first and/or second polycarbonate sheeting materials of the heat exchanger.

It is to be appreciated that the transparent panel (or the first sheeting structure, where the transparent panel is omitted) may be of any suitable shape and dimension. In one embodiment, the transparent panel (or first sheeting panel) is corrugated or flat up to an angle of corrugation of 45 degrees. This increases both heat absorption and strength.

The insulation support, for example insulation box, is preferably arranged to surround and/or encompass at least a portion of the transparent panel.

The solar collector may have any suitable dimensions and/or shape depending on the requirements of the collector. For example, the solar collector is preferably a flat plate solar collector.

The insulation support may be composed of any suitable materials. Preferably, the insulation box is composed of one or more lightweight material. For example, the insulation box may be composed of plastic and/or foam insulation materials. The insulation box may be a metal (for example aluminium), plastic or wooden box comprising insulation materials selected from: foam, plastic, wood, or any natural or synthetic insulation material, or any combination thereof.

The insulation support preferably comprises plastic and/or foam insulation material located on an area of the collector which is arranged in use to be located adjacent a roof structure, for example the rear of the collector.

The insulation support preferably substantially surrounds and/or encloses the perimeter of at least one of the heat exchangers and/or the transparent panel.

According to a further aspect there is provided a method for installing a water heater/air heater system as herein described, comprising connecting the water and/or air supply to the solar collector such that the water and/or air supply is in fluid communication with the cavity of the heat exchanger; and connecting the hot water and/or outlet to the solar collector such that the outlet(s) is in fluid communication with the cavity of the heat exchanger. The hot water outlet may be in fluid communication with a hot water tank.

### Brief Description of the Drawings

An embodiment of the invention will now be described, by way of example only, and with reference to the accompanying drawings, in which:
Figure 1 illustrates a view of a heat exchanger during construction of a water heater/air heater system according to one embodiment of the present invention before being inserted within an insulation support;
Figure 2 illustrates a view of a solar flat-collector of a water heater/air heater system according to one embodiment of the present invention comprising the heat exchanger of Figure 1;
Figures 3 and 4 illustrate views of a solar flat-collector of a water heater/air heater system according to a further embodiment of the present invention comprising the heat exchanger of Figure 1;
Figure 5 illustrates a schematic illustration of a solar flat-collector of a water heater/air heater system according to a further embodiment of the present invention in a closed flat collector system for direct water heating;
Figure 6 illustrates a schematic illustration of a solar flat-collector of a water heater/air heater system according to a further embodiment of the present invention in an open flat collector system with a heat exchanger;
Figure 7 illustrates a schematic illustration of a water heater/air heater system comprising a solar flat-collector according to a further embodiment of the present invention.

### Detailed Description of the Invention

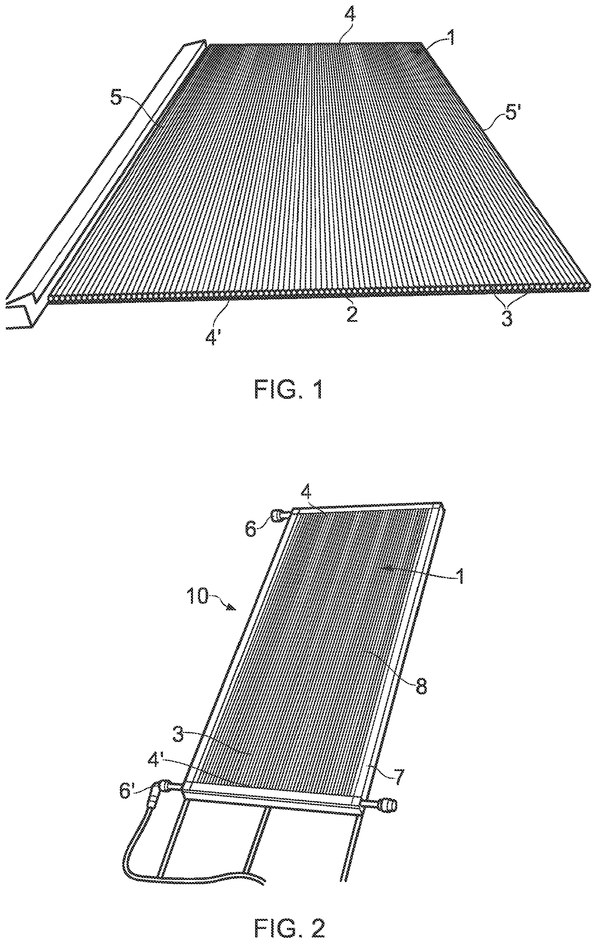

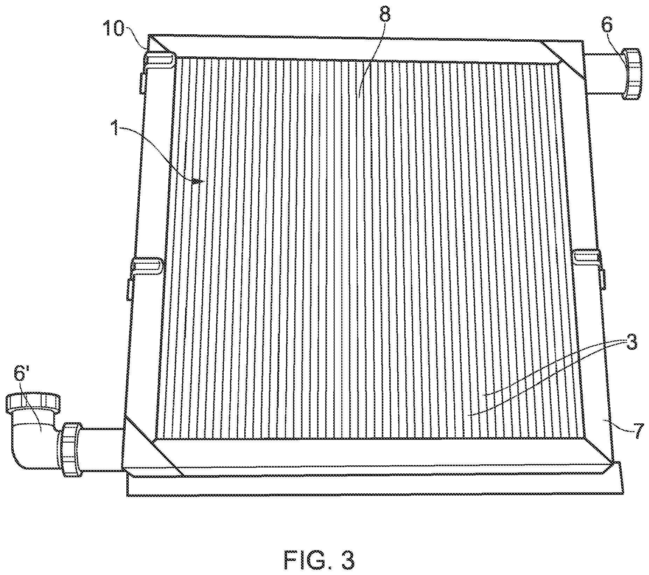

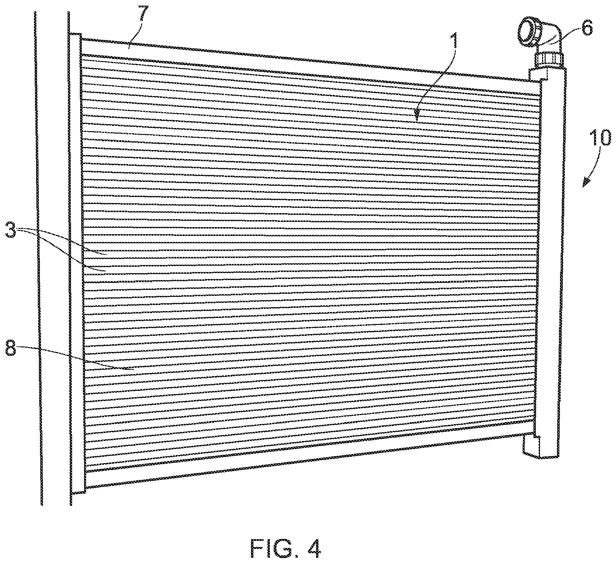

With reference to Figures 1 to 4, the heat exchanger 1 comprises a first and a second polycarbonate sheeting material 2 spaced apart to define a cavity therebetween. The sheeting materials 2 have a thickness of approximately 0.2 mm. It is however to be understood that any suitable polymeric materials and may have any suitable dimensions depending on the requirements for the heat exchanger. The sheeting materials preferably have a thickness of at least 0.2 mm, for example the sheeting materials may have a thickness in the range of between about 1 and 2 mm when a pressurised system is used.

The separation between the pair of spaced apart polycarbonate sheeting materials 2 is approximately 20 mm. It is however to be understood that the separation between the pair of spaced apart sheeting materials may vary depending on the requirements for the heat exchanger. Typically, the separation between the sheeting materials is in the range of between about 10 mm and about 40 mm. Although the illustrated embodiment comprises polycarbonate sheeting, it is to be understood that any suitable transparent polymeric sheeting material may be used. The first and second transparent polymeric sheeting materials may be composed of the same material, or may be composed of different materials.

The heat exchanger, cavity provided within the heat exchanger, and the solar collector illustrated in the Figures are substantially rectangular in shape. It is however to be understood that the heat exchanger, the cavity and the corresponding solar collector may have any suitable shape depending on the requirements. For example, the heat exchanger, cavity, the solar collector and/or the sheeting materials may be circular, ovaloid, rectangular or square in shape.

As illustrated in Figures 1 to 4, the cavity comprises a first pair of opposed sides 4,4' and a second pair of opposed sides 5,5'. The first pair of opposed sides 4,4' of the cavity are in fluid communication with water connection pipes 6,6'. The second pair of opposed sides 5,5' of the cavity are substantially sealed.

A plurality of U-shaped copper heat conductors 3 are arranged to be located within the cavity. The use of copper provides antibacterial properties, killing bacteria and rendering the water sterile. Although the embodiment illustrated comprises copper heat conductors it is to be understood that the heat exchanger may comprise any suitable heat conductors, such as for example aluminium (such as for example aluminium foil), copper, carbon-coated foil, copper/carbon coated foil, carbon composite material, carbon fibre with or without metal inclusions or any suitable alloy. It is also to be understood that the heat exchanger may comprise any suitable number of heat conductors. The heat exchanger may for example comprise a single heat conductor.

Each copper heat conductor 3 is substantially U-shaped, with the spaced apart arms, for example the elongate portions, of the U-shaped copper portion 3 extending substantially parallel to the sheeting material 2. The heat conductors may have any suitable shape and/or dimensions. The heat conductor(s) may comprise tubular portions having any suitable cross-sectional shape, such as for example circular, ovaloid, square, rectangular, triangular, multifaceted. The heat exchanger may comprise a combination of heat conductors having different shapes and/or dimensions depending on the requirements of the heat exchanger.

The dimensions, for example the thickness, of the heat conductors of the heat exchanger, for example as measured between opposing arms of the U-shaped heat conductor, are selected to provide sufficient mechanical strength such that the heat conductors are not damaged by pressure from the water flow as well to ensure that the heat conductors are able to release almost the entire radiation as heat within the water.

The outer surface of the copper heat conductors 3 of the heat exchanger are painted with a water resistant black coating to reduce reflection of the light and to protect the metal from oxidation. It is to be understood that the outer surface metal portions of the heat exchanger may be coated with any suitable black coating.

The copper heat conductors 3 are arranged within the cavity to extend between the first pair of opposed sides 4,4' of the cavity. The copper heat conductors 3 are arranged within the cavity such that the longitudinal axis of each copper heat conductor 3 is substantially aligned with the direction of flow of the water into the cavity. Each heat conductor 3 is adjacent to and substantially in contact with an adjacent heat conductor 3.

It is to be understood that the heat conductor(s) may be placed in any suitable orientation, location and/or arrangement within the cavity depending on the particular requirements of the heat exchanger. The heat conductor(s) may be arranged to extend between, for example substantially from a first side to a second side of, a pair of sides of the cavity. One or more of the heat conductor(s) may however only extend partially across the cavity, for example partially between a pair of opposed sides of the cavity. The longitudinal axes of the heat conductor(s) may be offset from the direction of flow of the water through the cavity.

The heat conductors may extend substantially parallel to each other within the cavity. The heat conductors may be distributed evenly within the cavity. The heat conductors may be arranged to extend within the same plane within the cavity of the heat exchanger. Alternatively, the heat conductors may be arranged within a three dimensional configuration within the cavity of the heat exchanger.

One or more heat conductor may be arranged so as to be substantially in contact with an adjacent heat conductor. One or more of the heat conductors may be arranged to be spaced apart from adjacent heat conductors.

The water communication 6,6' pipes are attached to the polycarbonate sheeting materials by high temperature glue. It is however to be understood that the connection pipes may be attached by any suitable means, such as for example reversibly attached or permanently attached to the ends of the sheeting materials. The connection pipes may be attached for example by post extrusion or by using high temperature glue. The connection pipes may be composed of any suitable material. Preferably, the connection pipes are composed of polycarbonate.

A transparent panel 8 is shaped and dimensioned to be aligned with and placed adjacent to or in contact with the first sheeting material of the heat exchanger 1. The transparent panel may be composed of any suitable material. Preferably, the transparent panel is composed of polycarbonate, acrylic (polymethlamethacrylate), butyrate (cellulose acetate butyrate), Lexan (polycarbonate), PETG (glycol modified polyethylene terephthalate), or a combination thereof. It is however to be understood that the solar collector 10 may not include an additional transparent panel. The transparent panel may be provided by the first sheeting material of the heat exchanger 1. It is to be appreciated that the transparent panel (or the first sheeting panel where the transparent panel is omitted) may be of any suitable shape and dimension. In this case, the transparent panel 8 is corrugated.

The transparent panel and the heat exchanger 1 are received within and partially surrounded by an insulation support 7. The insulation support 7 is substantially rectangular in shape and is sized to receive and surround the periphery of the transparent panel and the heat exchanger. The installation support 7 comprises a rear portion arranged in use to be located adjacent the rear of the heat exchanger. The rear portion of the installation support 7 is arranged in use to be located adjacent a roof.

The insulation support 7 is composed of lightweight plastic material. The rear portion of the insulation support 7 comprises a foam section located to the rear of the heat exchanger 1 which is arranged in use to be located adjacent a roof structure, for example the rear of the collector. It is to be understood that the installation support may have any suitable shape to receive and at least partially surround the transparent panel and/or the heat exchanger.

The heat exchanger does not require any additional components, such as back plating, in order to improve the heat exchange efficiency.

One of the reasons for the improved heat exchange efficiency of the heat exchanger is because the process of heat transfer is occurring within the water within the cavity.

The construction of the heat exchanger is also very light and the majority of the weight is provided by the water within the cavity rather than by the supporting construction. As the overall weight of the heat exchanger of the present invention is significantly reduced compared to conventional systems a greater number of heat conductors may be placed within the cavity. The heat exchanger may therefore comprise an increased number of heat conductors, compared to conventional exchangers, arranged such that there is a very small separation between adjacent heat conductors with the cavity. The heat exchanger therefore does not require additional back plating. Furthermore, the thickness and separation of the sheeting materials is selected to improve the heat exchange efficiency. The thickness and separation of the sheeting materials is selected to reduce and/or minimise any heat loss from within the cavity.

The heat exchanger, and the solar collector, have reduced production costs due to the heat exchanger and the solar collector having reduced number of components compared to conventional collectors. In particular the heat exchanger and solar collector do not require heavy support constructions and/or attachment plating.

In use, the solar collector 10 is placed in the desired location, such as for example on the roof, in the desired orientation such that the transparent panel is exposed to sunlight. As shown in Figure 2, the solar collector 10 may be supported on a standalone frame. The solar collector 10 is connected to a water supply. Water is introduced through the water inlet communication pipe 6 of the heat exchanger 1. Water flows through the cavity provided by the heat exchanger 1 and passes through water outlet communication pipe 6'.

As water passes through the cavity defined between the first and second polycarbonate materials 2,2', the transparent panel and the adjacent first polycarbonate sheeting material 2 is exposed to sun radiation. The solar radiation heats up the transparent panel and the first sheeting material 2. The transparent panel and the first sheeting material 2 are thin and as a result a portion of the infra-red energy is released to the water within the cavity. The infra-red energy passing through the sheeting material 2 and the transparent panel will be released into the water to heat the water. The energy passes through the water to the copper heat conductor(s). As the heat conductors 3 are U-shaped the light enters the U-shaped portion from the top and will bounce from the walls of each U-shaped heat conductor portion, thereby releasing the radiation as heat directly inside the water within the cavity. As a result, the heat loss from the heat exchanger 1 of the present invention has been found to be significantly less than conventional solar collector heat exchangers.

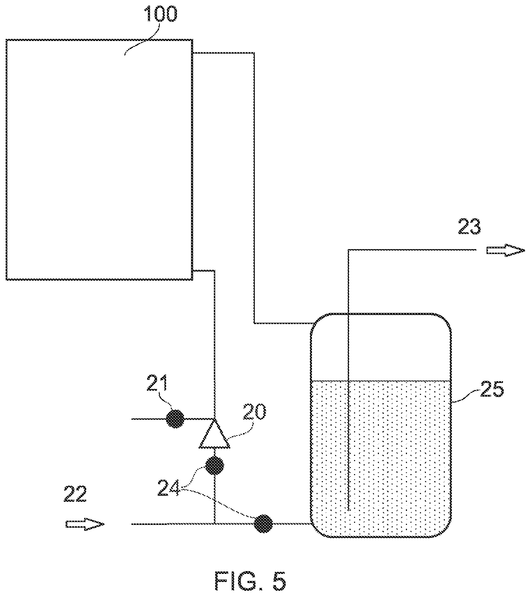

As shown in Figures 5 to 7, the heat exchanger and solar collector can be used in household hot water and/or air systems. The heat exchanger and solar collector may be retrofitted to an existing hot water and/or air system.

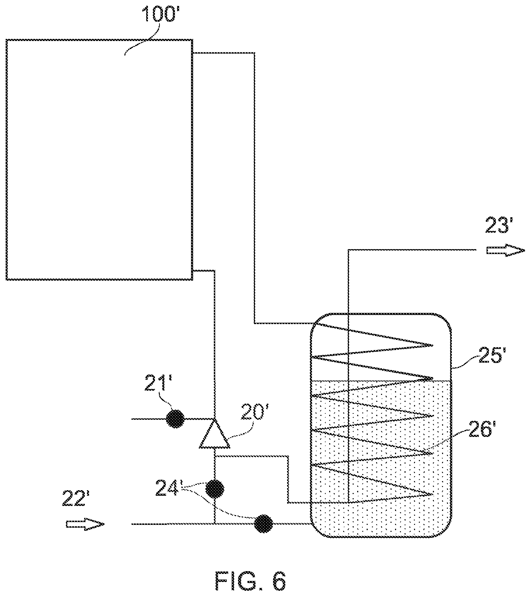

Solar powered hot water heating is often used as a second system for heating household water. The primary system typically uses electric or gas technology. In this case a single tank for hot water is used. An overflow storage tank is used if the system can heat above 85 deg. C as shown in Figures 5 and 6. The present invention can be used with an open or closed system.

Figure 5 illustrates an open system which does not require an additional heat exchanger. Cold water is introduced into the system through the cold water inlet 22 and pumped by pump 20 through the solar flat collector 100 and onwards to the hot water tank 25. Hot water is supplied to the house from the hot water tank 25 by the hot water outlet 23. Control of the flow of cold water to the hot water tank 25 and to the solar flat collector 100 can be controlled by bypass valves 24 as required. This system can be self-drained using spigot drain valve 21 when the temperature of the water reaches temperatures below 5 degrees (for example).

Figure 6 illustrates a closed system with an additional heat exchanger 26'. As described for the open system, cold water is introduced into the system through the cold water inlet 22' and pumped by pump 20' through the solar flat collector 100' and onwards to the hot water tank 25'. Hot water is supplied to the house from the hot water tank 25' by the hot water outlet 23'. Control of the flow of cold water to the hot water tank 25' and to the solar flat collector 100' can be controlled by bypass valves 24' as required. This system can be self-drained using spigot drain valve 21' when the temperature of the water reaches temperatures below 5 degrees (for example). The additional heat exchanger 26' can be operated to provide additional heat to the hot water within tank 25'.

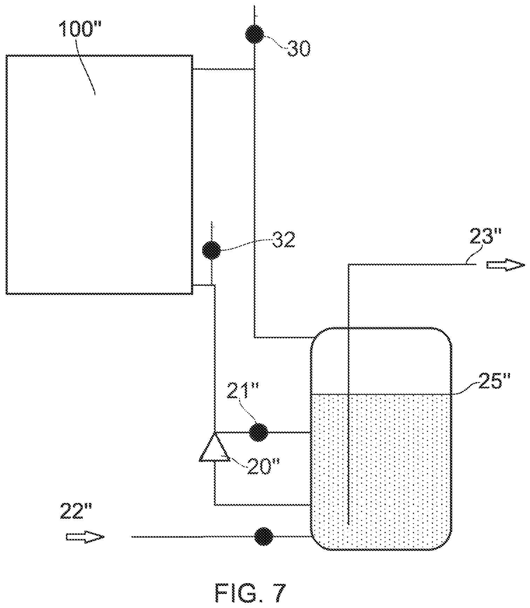

As shown in Figure 7, the system of the present invention can be used for heating water and to heat the air in the house. In order to heat the air, water is first drained from the system using spigot valve 21". All the valves for supplying water are closed. The air inlet valve 32 and the air outlet valve 30 are opened and air is pumped around the system using for example a low pressure fan or pump. When the system is required to heat water, the valves 30,32 for the air are closed. The water valves are opened, and the water flows through the system and is heated by the solar flat-collector 100". The hot water is stored in storage tank 25" .

Although aspects of the invention have been described with reference to the accompanying drawings, it is to be understood that the invention is not limited to the precise embodiment shown and that various changes and modifications may be effected without further inventive skill and effort. For example, the heat conductors may be coloured for architectural or aesthetic purposes.

## Claims

1. A water heater/air heater system comprising:
a solar collector (100") comprising a heat exchanger (1) comprising:
a first and a second transparent polymeric sheeting material (2, 2') defining a cavity therebetween suitable for receiving water and also suitable for receiving air; and
at least one non-transparent heat conductor (3) located within the cavity so as to be submerged inside the water or air within the cavity in use, in which the at least one heat conductor (3) is an elongate portion composed of metal, alloy, or a combination of metals and/or alloys, and wherein, in use, at least the first transparent polymeric sheeting material (2, 2') is exposed to solar radiation, such that infra-red radiation of such solar radiation passes through at least the first transparent polymeric sheeting material (2) to the heat conductor (3) located within the cavity, and the heat conductor (3) releases the radiation as heat directly to the water or air within the cavity;
a cold water inlet valve and a hot water outlet valve in communication with the cavity of the heat exchanger (1), in which the valves are selectively operable to allow water to flow through the solar collector (100");
a hot water tank (25") in communication with the hot water outlet valve;
a pump (20") selectively operable to pump water through the solar collector (100") and onwards to the hot water tank (25");
a spigot valve (21") selectively operable to drain water from the solar collector (100");
an air inlet valve (32) and an air outlet valve (30) in communication with the cavity of the heat exchanger (1), in which the valves (30, 32) are selectively operable to allow air to flow through the solar collector (100"); and
a low pressure fan or pump selectively operable to pump air around the solar collector (100").

2. A water heater/air heater system as claimed in claim 1, comprising a plurality of heat conductors (3), in which the heat conductors (3) are U-shaped portions.

3. A water heater/air heater system as claimed in claim 2, in which the heat conductors (3) extend substantially parallel to each other within the cavity.

4. A water heater/air heater system as claimed in either of claims 2 and 3, in which each heat conductor (3) is substantially in contact with an adjacent heat conductor (3).

5. A water heater/air heater system as claimed in any preceding claim, in which the heat conductor (3) is composed of one or more of: copper, aluminium or a metal alloy.

6. A water heater/air heater system as claimed in any preceding claim, in which the thickness of the heat exchanger (1) as measured between the external surfaces of the first and second polymeric sheeting materials (2, 2') is at least 10 mm.

7. A water heater/air heater system as claimed in any preceding claim, in which the solar collector further comprises an insulation support (7) arranged to surround at least a portion of the at least one heat exchanger (1).

8. A water heater/air heater system as claimed in claim 7, in which the solar collector further comprises a transparent panel (8) arranged in use to be exposed to the sunlight, in which the transparent panel (8) is composed of transparent polymeric material selected from polycarbonate, acrylic, butyrate, PETG, or a combination thereof.

9. A water heater/air heater system as claimed in claim 8, in which the insulation support (7) is arranged to surround at least a portion of the transparent panel (8) of the solar collector.

10. A water heater/air heater system as claimed in any one of claims 7 to 9, in which the solar collector (100") is a flat plate solar collector.

11. A water heater/air heater system as claimed in any one of claims 7 to 10, in which the insulation support (7) is composed of plastic and/or foam insulation materials.

12. A water heater/air heater system as claimed in any one of claims 7 to 11, in which the insulation box comprises plastic and/or foam located on an area of the collector (100") which is arranged in use to be located adjacent a roof structure.

13. A water heater/air heater system as claimed in any preceding claim, in which the system comprises a plurality of solar collectors (100"), and a hydraulic circuit for circulating a heat transfer fluid extending therebetween.

14. A method for installing a water heater/air heater system as claimed in any preceding claim comprising connecting the water and/or air supply to the solar collector (100") such that the water and/or air supply is in fluid communication with the cavity of the heat exchanger (1); and connecting the outlet to the solar collector (100") such that the outlet is in fluid communication with the cavity of the heat exchanger (1).

## Patentansprüche

1. Warmwasser-/Warmlufterzeugungssystem, das Folgendes umfasst:
einen Solarkollektor (100"), der einen Wärmetauscher (1) umfasst, der Folgendes umfasst:
ein erstes und ein zweites transparentes Polymerfolienmaterial (2, 2'), das einen Hohlraum zwischen diesen definiert, der zum Aufnehmen von Wasser geeignet ist und auch zum Aufnehmen von Luft geeignet ist; und
mindestens einen nicht transparenten Wärmeleiter (3), der innerhalb des Hohlraums derart angeordnet ist, dass er bei der Verwendung in dem Wasser oder der Luft innerhalb des Hohlraums eingetaucht ist, wobei der mindestens eine Wärmeleiter (3) ein länglicher Abschnitt ist, der aus Metall, einer Legierung oder einer Kombination von Metallen und/oder Legierungen besteht, und wobei bei der Verwendung mindestens das erste transparente Polymerfolienmaterial (2, 2') derart Sonnenstrahlung ausgesetzt ist, dass Infrarotstrahlung dieser Sonnenstrahlung durch mindestens das erste transparente Polymerfolienmaterial (2) zu dem Wärmeleiter (3) gelangt, der sich innerhalb des Hohlraums befindet, und der Wärmeleiter (3) die Strahlung als Wärme direkt an das Wasser oder die Luft in dem Hohlraum abgibt;
ein Kaltwassereinlassventil und ein Warmwasserauslassventil in Verbindung mit dem Hohlraum des Wärmetauschers (1), wobei die Ventile selektiv betrieben werden können, damit Wasser durch den Sonnenkollektor (100") strömen kann;
einen Warmwasserspeicher (25") in Verbindung mit dem Warmwasserauslassventil;
eine Pumpe (20"), die selektiv betrieben werden kann, um Wasser durch den Solarkollektor (100") und weiter zum Warmwasserspeicher (25") zu pumpen;
ein Hahnventil (21"), das selektiv betrieben werden kann, um Wasser aus dem Solarkollektor (100") abzulassen;
ein Lufteinlassventil (32) und ein Luftauslassventil (30) in Verbindung mit dem Hohlraum des Wärmetauschers (1), wobei die Ventile (30, 32) selektiv betätigt werden können, damit Luft durch den Sonnenkollektor (100") strömen kann; und
ein Niederdruckventilator oder eine Niederdruckpumpe, die selektiv betrieben werden kann, um Luft um den Solarkollektor (100") zu pumpen.

2. Warmwasser-/Warmlufterzeugungssystem nach Anspruch 1, das mehrere Wärmeleiter (3) umfasst, wobei die Wärmeleiter (3) U-förmige Abschnitte sind.

3. Warmwasser-/Warmlufterzeugungssystem nach Anspruch 2, wobei sich die Wärmeleiter (3) innerhalb des Hohlraums im Wesentlichen parallel zueinander erstrecken.

4. Warmwasser-/Warmlufterzeugungssystem nach einem der Ansprüche 2 und 3, wobei jeder Wärmeleiter (3) im Wesentlichen mit einem benachbarten Wärmeleiter (3) in Kontakt steht.

5. Warmwasser-/Warmlufterzeugungssystem nach einem der vorhergehenden Ansprüche, wobei der Wärmeleiter (3) aus einem oder mehreren des Folgenden besteht: Kupfer, Aluminium oder einer Metalllegierung.

6. Warmwasser-/Warmlufterzeugungssystem nach einem der vorhergehenden Ansprüche, wobei die Dicke des Wärmetauschers (1), gemessen zwischen den äußeren Oberflächen des ersten und zweiten Polymerfolienmaterials (2, 2'), mindestens 10 mm beträgt.

7. Warmwasser-/Warmlufterzeugungssystem nach einem der vorhergehenden Ansprüche, wobei der Solarkollektor ferner einen Isolationsträger (7) umfasst, der derart angeordnet ist, dass er mindestens einen Abschnitt des mindestens einen Wärmetauschers (1) umgibt.

8. Warmwasser-/Warmlufterzeugungssystem nach Anspruch 7, wobei der Solarkollektor ferner eine transparente Platte (8) umfasst, die bei der Verwendung angeordnet ist, um dem Sonnenlicht ausgesetzt zu werden, wobei die transparente Platte (8) aus transparentem Polymermaterial besteht, das ausgewählt ist aus Polycarbonat, Acryl, Butyrat, PETG oder einer Kombination davon.

9. Warmwasser-/Warmlufterzeugungssystem nach Anspruch 8, wobei der Isolationsträger (7) derart angeordnet ist, dass er mindestens einen Abschnitt der transparenten Platte (8) des Solarkollektors umgibt.

10. Warmwasser-/Warmlufterzeugungssystem nach einem der Ansprüche 7 bis 9, wobei der Solarkollektor (100") ein Flachkollektor ist.

11. Warmwasser-/Warmlufterzeugungssystem nach einem der Ansprüche 7 bis 10, wobei der Isolationsträger (7) aus Kunststoff- und/oder Schaumstoffisolationsmaterialien besteht.

12. Warmwasser-/Warmlufterzeugungssystem nach einem der Ansprüche 7 bis 11, wobei der Isolierkasten Kunststoff und/oder Schaumstoff umfasst, der sich auf einer Fläche des Kollektors (100") befindet, die bei der Verwendung derart angeordnet ist, dass sie sich benachbart zu einer Dachstruktur befindet.

13. Warmwasser-/Warmlufterzeugungssystem nach einem der vorhergehenden Ansprüche, bei dem das System mehrere Solarkollektoren (100") und einen sich zwischen diesen erstreckenden Hydraulikkreislauf zum Zirkulieren eines Wärmeübertragungsfluids umfasst.

14. Verfahren zum Installieren eines Warmwasser-/Warmlufterzeugungssystems nach einem der vorhergehenden Ansprüche, das das Verbinden der Wasser- und/oder Luftversorgung mit dem Solarkollektor (100"), derart dass die Wasser- und/oder Luftversorgung in Fluidverbindung mit dem Hohlraum des Wärmetauschers (1) steht; und das Verbinden des Auslasses mit dem Solarkollektor (100"), derart dass der Auslass in Fluidverbindung mit dem Hohlraum des Wärmetauschers (1) steht, umfasst.

## Revendications

1. Système de chauffe-eau/de réchauffage d'air comprenant :
un capteur solaire (100") comprenant un échangeur de chaleur (1) comprenant :
un premier et un second matériau de revêtement polymérique transparent (2, 2') définissant entre eux une cavité adaptée pour recevoir de l'eau et également adaptée pour recevoir de l'air ; et au moins un conducteur thermique non transparent (3) situé à l'intérieur de la cavité de façon à être immergé dans de l'eau ou de l'air à l'intérieur de la cavité lors de l'utilisation, dans lequel l'au moins un conducteur thermique (3) étant une partie allongée composée de métal, d'alliage ou d'une combinaison de métaux et/ou d'alliage, et lors de l'utilisation, au moins le premier matériau de revêtement polymérique transparent (2, 2') étant exposé au rayonnement solaire, de sorte que le rayonnement infrarouge d'un tel rayonnement solaire passe à travers au moins le premier matériau de revêtement polymérique transparent (2) jusqu'au conducteur thermique (3) situé à l'intérieur de la cavité, et le conducteur thermique (3) diffuse le rayonnement sous forme de chaleur directement dans
l'eau ou l'air à l'intérieur de la cavité ;
une soupape d'entrée d'eau froide et une soupape de sortie d'eau chaude en communication avec la cavité de l'échangeur de chaleur (1) dans lequel les soupapes servent à permettre sélectivement à l'eau de s'écouler à travers le capteur solaire (100") ;
un réservoir d'eau chaude (25") en communication avec la soupape de sortie d'eau chaude ;
une pompe (20")
servant à pomper sélectivement de l'eau à travers le capteur solaire (100") et ensuite vers le réservoir d'eau chaude (25") ;
une soupape de robinet (21")
servant à drainer sélectivement l'eau du capteur solaire (100") ;
une soupape d'entrée d'air (32) et une soupape de sortie d'air (30) en communication avec la cavité de l'échangeur de chaleur (1), dans lequel les soupapes (30, 32) servent à permettre sélectivement à l'air de s'écouler à travers le capteur solaire (100") ; et
un ventilateur ou une pompe basse pression servant à pomper sélectivement de l'air autour du capteur solaire (100").

2. Système de chauffe-eau/de réchauffage d'air selon la revendication 1, comprenant une pluralité de conducteurs thermiques (3), dans lequel les conducteurs thermiques (3) sont des parties en forme de U.

3. Système de chauffe-eau/de réchauffage d'air selon la revendication 2, dans lequel les conducteurs thermiques (3) s'étendent sensiblement parallèles les uns aux autres à l'intérieur de la cavité.

4. Système de chauffe-eau/de réchauffage d'air selon l'une quelconque des revendications 2 et 3, dans lequel chaque conducteur thermique (3) est sensiblement en contact avec un conducteur thermique adjacent (3).

5. Système de chauffe-eau/de réchauffage d'air selon une quelconque revendication précédente, dans lequel le conducteur thermique (3) est composé d'un ou plusieurs éléments parmi : du cuivre, de l'aluminium ou un alliage métallique.

6. Système de chauffe-eau/de réchauffage d'air selon une quelconque revendication précédente, dans lequel l'épaisseur de l'échangeur de chaleur (1) telle que mesurée entre les surfaces externes des premier et second matériaux de revêtement polymériques (2, 2') est supérieure ou égale à 10 mm.

7. Système de chauffe-eau/de réchauffage d'air selon une quelconque revendication précédente, dans lequel le capteur solaire comprend en outre un support isolant (7) agencé pour entourer au moins une partie de l'au moins un échangeur de chaleur (1).

8. Système de chauffe-eau/de réchauffage d'air selon la revendication 7, dans lequel le capteur solaire comprend en outre un panneau transparent (8) agencé, lors de l'utilisation, pour être exposé à la lumière du soleil, dans lequel le panneau transparent (8) est composé d'un matériau polymérique transparent choisi parmi le polycarbonate, l'acrylique, le butanoate, le PETG ou une combinaison de ceux-ci.

9. Système de chauffe-eau/de réchauffage d'air selon la revendication 8, dans lequel le support isolant (7) est agencé pour entourer au moins une partie du panneau transparent (8) du capteur solaire.

10. Système de chauffe-eau/de réchauffage d'air selon l'une quelconque des revendications 7 à 9, dans lequel le capteur solaire (100") est un capteur solaire à plaque plate.

11. Système de chauffe-eau/de réchauffage d'air selon l'une quelconque des revendications 7 à 10, dans lequel le support isolant (7) est composé de matériaux isolants en plastique et/ou en mousse.

12. Système de chauffe-eau/de réchauffage d'air selon l'une quelconque des revendications 7 à 11, dans lequel la boîte d'isolation comprend du plastique et/ou de la mousse situé sur une zone du capteur (100") qui est agencée lors de l'utilisation pour être adjacente à une structure du toit.

13. Système de chauffe-eau/de réchauffage d'air selon une quelconque revendication précédente, dans lequel le système comprend une pluralité de capteurs solaires (100") et un circuit hydraulique destiné à faire circuler un fluide caloporteur s'étendant entre eux.

14. Procédé permettant l'installation d'un système chauffe-eau/de réchauffage d'air selon une quelconque revendication précédente, comprenant le raccordement de l'alimentation en eau et/ou en air au capteur solaire (100") de sorte que l'alimentation en eau et/ou en air soit en communication fluidique avec la cavité de l'échangeur de chaleur (1) ; et le raccordement de la sortie au capteur solaire (100") de sorte que la sortie soit en communication fluidique avec la cavité de l'échangeur de chaleur (1).
